# EUROPÄISCHE PATENTSCHRIFT

(11) **EP 2 100 808 B1**
(45) Veröffentlichungstag und Bekanntmachung des Hinweises auf die Patenterteilung: **15.06.2011**
(21) Anmeldenummer: 08010940.8
(22) Anmeldetag: 17.06.2008
(51) Int. Cl.: B63H 5/16

(54) **Vorrichtung zur Verringerung des Antriebsleistungsbedarfs eines Schiffes**
Device for lowering the drive output requirements of a ship
Dispositif de réduction de la puissance d'entraînement nécessaire d'un bateau

(30) Priorität: 10.03.2008 DE 202008003367 U; 02.05.2008 DE 202008006069 U
(43) Veröffentlichungstag der Anmeldung: 16.09.2009
(73) Patentinhaber: Becker Marine Systems GmbH & Co. KG, 20179 Hamburg (DE)
(72) Erfinder: Mewis, Friedrich, 01219 Dresden (DE)
(74) Vertreter: Richter, Werdermann, Gerbaulet & Hofmann

(56) Entgegenhaltungen:
- DE-C1- 4 223 570
- JP-A- 7 267 189
- JP-A- 58 000 492
- JP-A- 58 016 981
- US-A- 4 288 223

## Beschreibung

Die Erfindung betrifft ein Schiff mit einer Vorrichtung zur Verringerung des Antriebsleistungsbedarfes gemäß dem Oberbegriff des Anspruches 1.

Aus der DE 42 23 570 C1 ist eine Strömungsleitfläche für Verstellpropeller bekannt. Bei dieser Strömungsleitfläche ist vorgesehen, dass durch eine vorgeschaltete Ringdüse als Diffusor eine Strömungsbeeinflussung durchgeführt wird. Hierfür wird eine Verzögerung der Anströmung im Nahbereich und eine Beschleunigung der Anströmung im außenliegenden Bereich durchgeführt. Der Diffusordurchmesser ist kleiner als 65% des Propellerdurchmessers. Eine solche Düse ist als Verzögerungsdüse bzw. als Diffusor mit nach außen gewölbter Ringdüse ausgeführt. Dieser Diffusor verzögert die Strömung in seinem Bereich, was nur durch sehr dicke Naben, wie bei Verstellpropeller, zu einer Verbesserung des Propulsionswirkungsgrades führen kann. Eine solche Düse ist daher nicht als Beschleunigungsdüse mit einer Wölbung der Ringdüse nach innen ausgeführt. Die in dieser Druckschrift vorgestellte Düse beschleunigt daher nicht die Strömung in ihrem Bereich und ist nicht für alle Propellertypen geeignet, insbesondere nicht für Festpropeller geeignet. Ein Wirkprinzip einer Vordüse, das in der Erhöhung der Propellerströmgeschwindigkeit in Gebieten sehr hohen Mitstromes besteht, wird in der DE 42 23 570 C1 nicht beschrieben.

Aus der JP 07 267189 A ist eine Propelleranordnung mit einer ringförmigen Düse und sternförmig angeordneten Flossen bekannt. Der Propellerdurchmesser entspricht etwa dem Ringdurchmesser der Düse.

In der JP 58 000492 A ist eine weitere Propelleranordnung gezeigt, mit der eine Verbesserung des Wirkungsgrades und eine Verringerung des Antriebsleistungsbedarfs möglich sein soll. Diese Anordnung umfasst ebenfalls Flossen sowie eine Struktur bestehend aus sechs wabenförmig angeordneten Elementen.

Aus der GB 2 119 732 A ist eine Strömungsleitfläche für Einschraubenschiffe bekannt. Dabei ist im Horizontalabstand bis zu einem Propellerdurchmesser vor dem Propeller eine Ringdüse angeordnet, wobei der Schwerpunkt der umschlossenen Querschnittsfläche oberhalb der Propellerachse liegt.

In der US 4,932,908 wird ein energieeffizientes Antriebssystem beschrieben. Das Antriebssystem besteht aus Leitblechen und einem Propeller, wobei die Leitflächen asymmetrisch um die Propellerscheibe verteilt angeordnet sind.

Durch die GB 2 177 365 A ist eine Ablenkblechanordnung zur Beeinflussung des Propellerzustroms für Ein- und Mehrschraubenschiffe bekannt, wobei mindestens eine Steuerfläche, die am Schiffsrumpf in Strömungsrichtung vor dem Propeller und auf einer oder beiden Seiten der Propellerachse vorgesehen ist.

Aufgabe der vorliegenden Erfindung ist es, ein Schiff mit einer Vorrichtung zu schaffen, die der Verringerung des Antriebsleistungsbedarfes eines Schiffes dient.

Gelöst wird diese Aufgabe durch eine Vorrichtung mit den Merkmalen des Anspruches 1 sowie deren Verwendung.

Hiernach ist das Schiff gemäß der eingangs beschriebenen Art erfindungsgemäß in der Weise ausgebildet, dass der Innendurchmesser der Vordüse rotationssymmetrisch mit nach oben verschobener, oberhalb der Propellerachse liegender Achse angeordnet ist.

Mit einer derart ausgebildeten Vorrichtung ist es möglich, den Antriebsleistungsbedarf eines Schiffes zu verringern. Der mögliche Gewinn steigt mit zunehmendem Schubbelastungsgrad des Propellers. Die Vorrichtung eignet sich besonders für langsame, völlige Schiffe, wie Tanker, Bulker und Schlepper und auch für nicht sehr schnelle Schiffe aller Typen. Die Vorrichtung selbst ist vor dem Propeller des Schiffes fest am Schiffskörper angebracht und besteht aus den beiden Funktionselementen Vordüse und Flossen bzw. Tragflügel.

Dabei besteht das Wirkungsprinzip der Vordüse in der Erhöhung der Propelleranströmgeschwindigkeit in Gebieten sehr hohen Mitstromes und Verringerung der Propelleranströmgeschwindigkeit in Gebieten geringen Mitstromes und das der innerhalb der Vordüse angeordneten Flossen bzw. Tragflügel in der Erzeugung eines Vordralls, wobei beide Funktionselemente auf verschiedene Verlustquellen zielen, nämlich die Vordüse auf eine Verringerung der effektiven Schubbelastung und die Flossen bzw. Tragflügel auf eine Verringerung der Drallverluste im Propellerstrahl. Durch beide Effekte wird der Wirkungsgrad des Propulsionssystems erhöht.

Die Vordüse ist rotationssymmetrisch mit nach oben verschobener oberhalb der Propellerachse liegenden Achse angeordnet, wobei der Innendurchmesser der Vordüse maximal 90 % des Propellerdurchmessers beträgt.

Ferner sind die bevorzugterweise vier Flossen bzw. Tragflügel unsymmetrisch innerhalb der Vordüse und radial zur Propellerachse angeordnet. Bevorzugterweise verbinden die Flossen bzw. Tragflügel den Schiffskörper mit der Vordüse und sind am hinteren Ende der Vordüse angeordnet.

Bevorzugterweise ist die gewölbte Seite des tragflügelförmigen und auch linsenförmigen Querschnittsprofils der Flosse bzw. des Tragflügels auf der aufwärts schlagenden Seite des Propellers nach oben und auf der abwärts schlagenden Seite des Propellers nach unten gerichtet ist.

Die Anordnung von vier Flossen bzw. Tragflügeln im Innenraum der Vordüse stellt jedoch keine Beschränkung dar, zumal auch eine geringere oder größere Anzahl von Flossen bzw. Tragflügel vorgesehen sein kann.

In der Zeichnung ist ein Ausführungsbeispiel für ein Schiff mit einem über oben nach Steuerbord drehendem Propeller der erfindungsgemäßen Vorrichtung dargestellt und zwar zeigt:
- Fig. 1: in einer Seitenansicht von Steuerbord die erfindungsgemäße aus einer Vordüse mit in deren Innenraum angeordneten Flossen bzw. Tragflügeln bestehenden Vorrichtung,
- Fig. 2: die Vorrichtung in einer Ansicht von hinten, wobei die Flossen bzw. Tragflügel nicht angestellt dargestellt sind,
- Fig. 3: einen vergrößerten Querschnitt durch das Profil einer Flosse bzw. eines Tragflügels;
- Fig. 4: eine Seitenansicht der Heckkontur,
- Fig. 5: einen Spantenriss des Hinterschiffes und
- Fig. 6: die Vordüse mit in deren Innenraum angeordneten Flossen bzw. Tragflügeln gemäß Fig. 1 mit Stellungsanordnungen der Flossen.

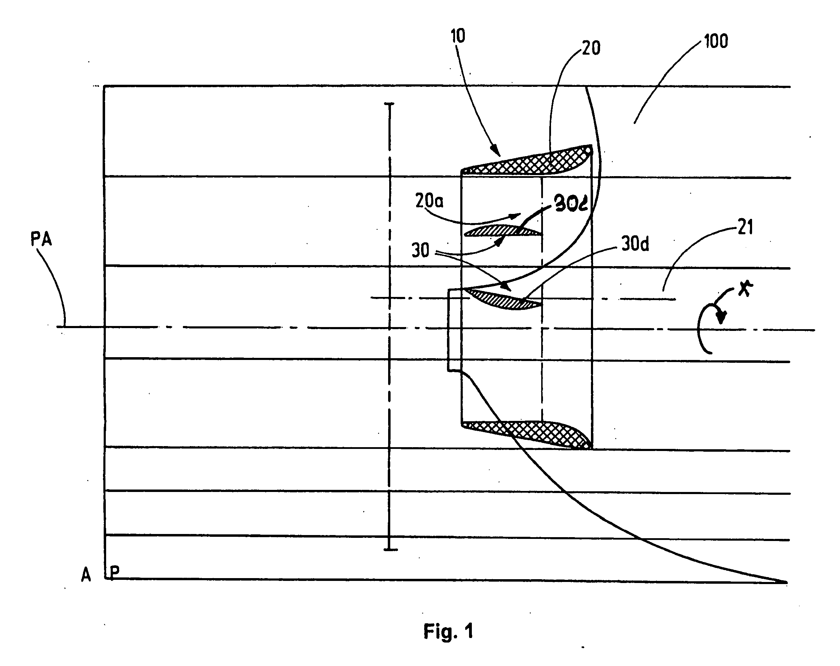

Gemäß Fig. 1 besteht die Vorrichtung 10 zur Verringerung des Antriebsleistungsbedarfes eines Schiffes darin, dass unmittelbar vor dem in der Zeichnung nicht dargestellten Propeller eines Schiffskörpers 100 eine Vordüse 20 mit zylindrischer Formgebung oder einer andersartig gestalteten Form oder Querschnittsform vorgesehen ist, die fest am Schiffskörper angebracht ist. Im Innenraum 20a der Vordüse 20 sind Flossen bzw. Tragflügel 30 angeordnet. Die Vordüse 20 ist rotationssymmetrisch mit nach oben verschobener Achse 21 am Schiffskörper angeordnet.

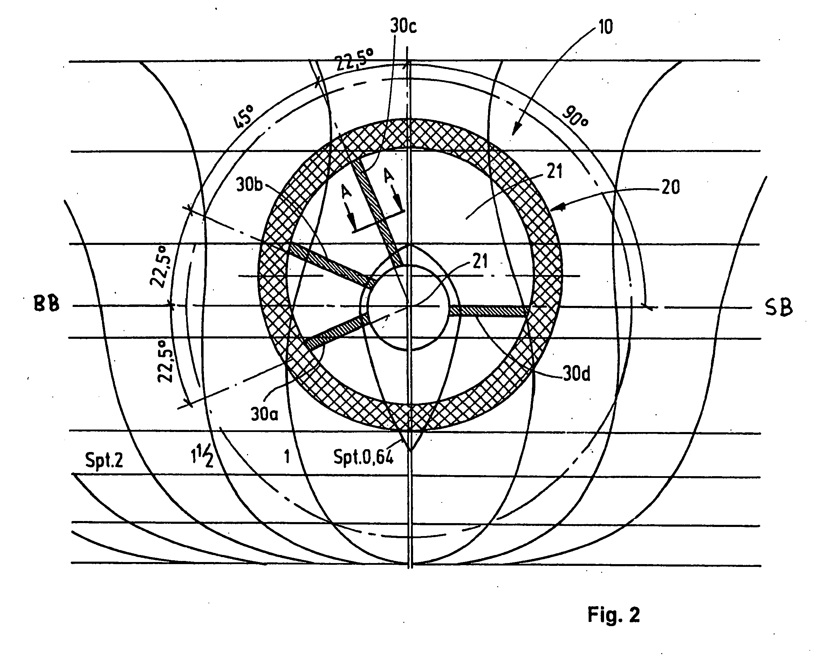

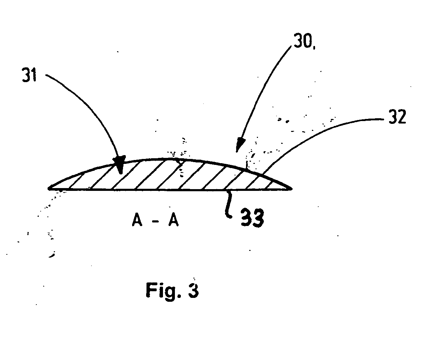

Bei dem in Fig. 2 dargestellten Ausführungsbeispiel sind im Innenraum 20a der Vordüse 20 vier Flossen bzw. Tragflügel 30a, 3015, 30c, 30d sternförmig mit unterschiedlichen Flossen- bzw. Tragflügellängen angeordnet. Diese vier Flossen bzw. Tragflügel sind unsymmetrisch innerhalb der Vordüse und radial zur Propellerachse PA angeordnet. Dabei verbinden die Flossen bzw. Tragflügel 30a, 30b, 30c, 30d die Vordüse 20 mit dem Schiffskörper 100 und sind am hinteren dem Propeller zugekehrten Ende der Vordüse 20 angeordnet, wobei die gewölbte Seite 32 des tragflügelförmigen oder linsenförmigen Querschnittsprofils 31 der Flossen bzw. Tragflügel 30, 30a, 30b, 30c, 30d auf der Backbordseite des Schiffes bzw. auf der aufwärts schlagenden Seite des Propellers nach oben und auf der Steuerbordseite des Schiffes bzw. abwärts schlagenden Seite des Propellers nach unten gerichtet ist. Die Flossen bzw. Tragflügel 30a, 30b, 30c, 30d sind des Weiteren backbordseitig vom nach oben und steuerbordseitig vom nach unten gerichtet (Fig. 2 und 3). Die Umlaufrichtung des Propellers erfolgt in Pfeilrichtung X (Fig. 1). Die in dem Innenraum 20a der Vordüse 20 angeordneten Flossen bzw. Tragflügel 30 bzw. 30a, 30b, 30c, 30d sind in ihren Winkelstellungen verstellbar und in den eingestellten Winkelstellungen arretierbar.

Nach einem Ausführungsbeispiel mit über oben nach Steuerbord drehendem Propeller nehmen die Flossen bzw. Tragflügel 30a, 30b, 30c, 30d folgende, bevorzugte radiale Winkelstellungen und Ausgangswinkelstellungen ein:

| | | Flossenwinkel | Anstellwinkel |
|---|---|---|---|
| Backbord (BB) | untere Flosse (30a) | 247,5° | 14° |
| Backbord (BB) | mittlere Flosse (30b) | 292,5° | 12° |
| Backbord (BB) | obere Flosse (30c) | 337,5° | 8° |
| Steuerbord (SB) | Flosse (30d) | 90,0° | 10° |

, und zwar bei einer Flossenwinkeldefinition: von hinten gesehen: 12 Uhr = 0°, im Uhrzeigersinn wachsend, wobei die Flossenwinkel und die Anstellwinkel von den angegebenen Werten abweichen können.

Nach der in Fig. 1, 3 und 6 dargestellten Ausführungsform weisen die Flossen bzw. Tragflügel ein linsenförmiges Querschnittsprofil 31 mit einer gewölbten Seitenwand 32 und mit einer geradlinig verlaufenden Grundfläche 33 auf. Die Anordnung und die Stellung beispielsweise der beiden Flossen 30 zur Propellerachse PA ist dabei derart, dass die obere Flosse mit ihrer Grundfläche 33 in etwa parallel zur Propellerachse PA verlaufend ist, wohingegen die untere Flosse eine Stellung einnimmt, bei der ihre Grundfläche 33 in einem Winkel a von mindestens 5°, bevorzugterweise von 10° zur Propellerachse PA verlaufend ist. Andere Winkelstellungen der Flossen sind möglich. Insgesamt weisen bevorzugterweise die Flossen 30a, 30b, 30c, 30d die in Fig. 2 gezeigten Stellungen auf.

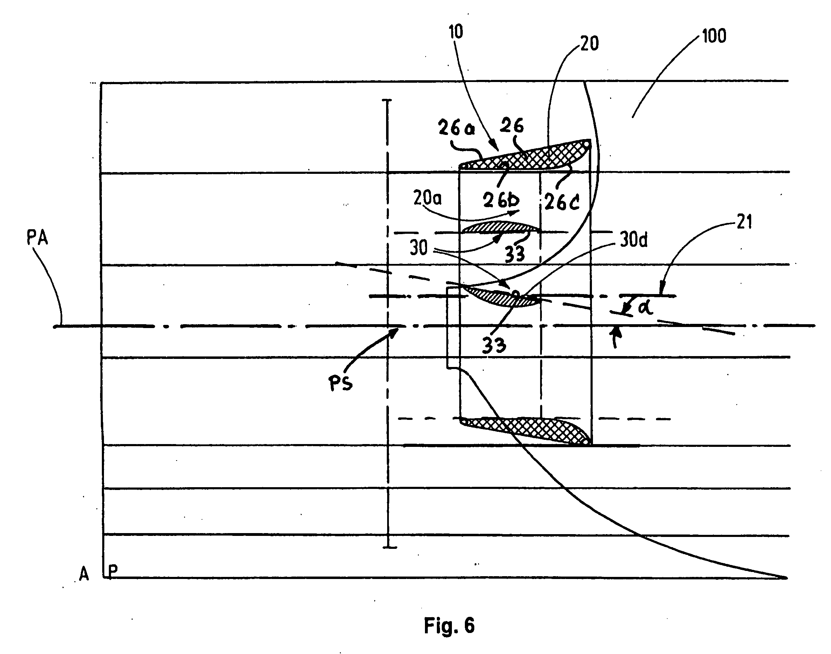

Die Vordüse 20 gemäß Fig. 1 und 6 wird gebildet von einem Formkörper 25 mit einem Querschnittsprofil 26 mit einem außenseitig liegenden, in einem Winkel zur Propellerachse PA schräg verlaufenden Wandabschnitt 26a und mit einem innenliegenden geradlinig und parallel zur Propellerachse PA verlaufenden Wandabschnitt 26b, der in dem dem Propeller abgewandten Bereich einen bogenförmigen Wandabschnitt 26c aufweist, der in den außenseitigen Wandabschnitt 26a übergeht. Der außenseitig liegende Wandabschnitt 26a kann auch bogenförmig ausgebildet sein. Die Propellerseite ist bei PS in Fig. 6 angedeutet.

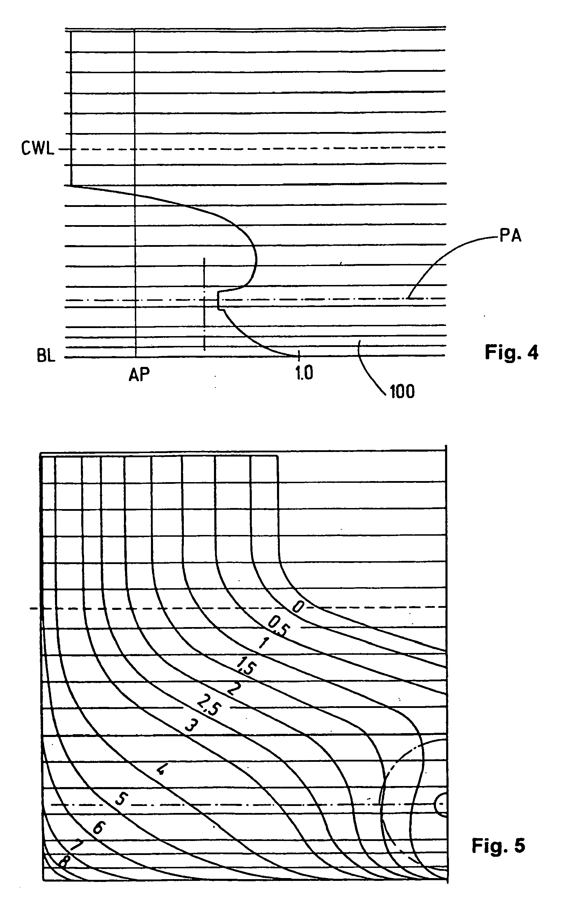

Die erfindungsgemäße Vorrichtung ist gekennzeichnet durch die in den Ansprüchen angegebenen Merkmale und durch die in den Fig. 1 bis 6 der Zeichnungen dargestellten Ausgestaltungen.

### Bezugszeichenliste

- 10: Vorrichtung
- 20: Vordüse
- 20a: Innenraum
- 21: Achse der Vordüse
- 25: Formkörper
- 26: Querschnittsprofil
- 26a: Wandabschnitt
- 26b: Wandabschnitt
- 26c: Wandabschnitt

- 30: Flosse/Tragflügel
- 30a: Flosse/Tragflügel
- 30b: FlosselTragflügel
- 30c: Flosse/Tragflügel
- 30d: Flosse/Tragflügel
- 31: Querschnittsprofil
- 32: gewölbte Seitenwand
- 33: Grundfläche

- 100: Schiffskörper

- BB: Backbord
- SB: Steuerbord
- PA: Propellerachse
- PS: Propellerseite
- X: Umlaufrichtung des Propellers
- α: Winkel

## Patentansprüche

1. Antriebssystem eines Schiffes mit mindestens einem auf einer Propellerachse (PA) angeordneten Propeller und mit einer Vorrichtung (10) zur Verringerung des Antriebsleistungsbedarfes des Schiffes, die vor dem Propeller fest am Schiffskörper angebracht ist und eine Vordüse (20) aufweist, wobei die Vordüse (20) einen Innendurchmesser aufweist, der kleiner als 90 % des Durchmessers des Propellers ist, wobei die Vordüse (20) rotationssymmetrisch mit nach oben verschobener, oberhalb der Propellerachse (PA) liegender Achse (21) angeordnet ist, **dadurch gekennzeichnet, dass** innerhalb der Vordüse Flossen bzw. Tragflügeln (30; 30a, 30b, 30c, 30d) angeordnet sind, wobei die Flossen bzw. Tragflügel (30; 30a, 30b, 30c, 30d) unsymmetrisch im Innenraum (20a) der Vordüse (20) und radial zur Propellerachse (PA) angeordnet sind,

2. Antriebssystem eines Schiffes nach Anspruch 1,
**dadurch gekennzeichnet,**
**dass** die Flossen bzw. Tragflügel den Schiffskörper mit der Vordüse (20) verbinden und am hinteren Ende der Vordüse (20) angeordnet sind, wobei die gewölbte Seite (32) des linsenförmigen Querschnittsprofils (31) der Flosse bzw. des Tragflügels (30; 30a, 30b, 30c, 30d) auf der aufwärts schlagenden Seite des Propellers nach oben und auf der abwärts schlagenden Seite des Propellers nach unten gerichtet ist.

3. Antriebssystem eines Schiffes nach einem der vorhergehenden Ansprüche 1 bis 2,
**dadurch gekennzeichnet,**
**dass** die Flossen bzw. Tragflügel (30; 30a, 30b, 30c, 30d) folgende radiale Winkelstellungen und Ausgangswinkelstellungen einnehmen:
| | | Flossenwinkel | Anstellwinkel |
|---|---|---|---|
| Backbord (BB) | untere Flosse (30a) | 247,5° | 14° |
| Backbord (BB) | mittlere Flosse (30b) | 292,5° | 12° |
| Backbord (BB) | obere Flosse (30c) | 337,5° | 8° |
| Steuerbord (SB) | Flosse (30d) | 90,0° | 10° |

4. Antriebssystem eines Schiffes nach einem der vorhergehenden Ansprüche 1 bis 3, **dadurch gekennzeichnet,**
**dass** die im Innenraum (20a) der Vordüse (20) angeordneten Flossen bzw. Tragflügel (30) in ihren Winkelstellungen veränderbar bzw. verstellbar sind.

5. Verwendung einer Vorrichtung (10) zur Verringerung des Antriebsleistungsbedarfes eines Schiffes, insbesondere für langsame, völlige Schiffe, wie Tanker, Bulker oder Schlepper, und auch für nicht sehr schnelle Schiffe aller Typen und zur Verbesserung der Propelleranströmung sowie zur Erzeugung eines Vordralles, wobei die Vorrichtung (10) vor dem Propeller fest am Schiffskörper angebracht ist und aus einer Vordüse (20) mit innerhalb der Vordüse angeordneten Flossen bzw. Tragflügeln (30; 30a, 30b, 30c, 30d) besteht, wobei die Vordüse (20) einen Innendurchmesser aufweist, der kleiner als 90 % des Durchmessers des Propellers ist und die Vordüse (20) rotationssymmetrisch mit nach oben verschobener, oberhalb der Propellerachse (PA) liegender Achse (21) angeordnet ist, wobei die Flossen bzw. Tragflügel (30; 30a, 30b, 30c, 30d) unsymmetrisch im Innenraum (20a) der Vordüse (20) und radial zur Propellerachse (PA) angeordnet sind

6. Verwendung einer Vorrichtung (10) nach Anspruch 5, wobei die Flossen bzw. Tragflügel den Schiffskörper mit der Vordüse (20) verbinden und am hinteren Ende der Vordüse (20) angeordnet sind, wobei die gewölbte Seite (32) des linsenförmigen Querschnittsprofils (31) der Flosse bzw. des Tragflügels (30; 30a, 30b, 30c, 30d) auf der aufwärts schlagenden Seite des Propellers nach oben und auf der abwärts schlagenden Seite des Propellers nach unten gerichtet ist.

7. Verwendung einer Vorrichtung (10) nach einem der vorhergehenden Ansprüche 5 oder 6, wobei die Flossen bzw. Tragflügel (30; 30a, 30b, 30c, 30d) folgende radiale Winkelstellungen und Ausgangswinkelstellungen einnehmen:
| | | Flossenwinkel | Anstellwinkel |
|---|---|---|---|
| Backbord (BB) | untere Flosse (30a) | 247,5° | 14° |
| Backbord (BB) | mittlere Flosse (30b) | 292,5° | 12° |
| Backbord (BB) | obere Flosse (30c) | 337,5° | 8° |
| Steuerbord (SB) | Flosse (30d) | 90,0° | 10° |

8. Verwendung einer Vorrichtung (10) nach einem der vorhergehenden Ansprüche 5 bis 7, wobei die im Innenraum (20a) der Vordüse (20) angeordneten Flossen bzw. Tragflügel (30) in ihren Winkelstellungen veränderbar bzw. verstellbar sind.

## Claims

1. A drive system of a ship comprising at least one propeller disposed on a propeller axis (PA) and comprising a device (10) for lowering the drive output requirement of the ship, which is mounted firmly on the hull upstream of the propeller and comprises a fore-nozzle (20), wherein the fore-nozzle (20) has an inside diameter which is less than 90% of the diameter of the propeller, wherein the fore-nozzle (20) is disposed rotationally symmetrically with its axis (21) shifted upwards, above the propeller axis (PA), **characterised in that** fins or hydrofoils (30; 30a, 30b, 30c, 30d) are disposed inside the fore-nozzle, wherein the fins or hydrofoils (30; 30a, 30b, 30c, 30d) are disposed asymmetrically in the interior (20a) of the fore-nozzle (20) and radially to the propeller axis (PA).

2. The drive system of a ship according to claim 1,
**characterised in that**
the fins or hydrofoils connect the hull to the fore-nozzle (20) and are disposed at the rear end of the fore-nozzle (20), wherein the curved side (32) of the lenticular cross-sectional profile (31) of the fins or hydrofoils (30; 30a, 30b, 30c, 30d) is directed upwards on the upwards-turning side of the propeller and is directed downwards on the downwards-turning side of the propeller.

3. The drive system of a ship according to any one of the preceding claims 1 to 2,
**characterised in that**
the fins or hydrofoils (30; 30a, 30b, 30c, 30d) adopt the following radial angular positions and initial angular positions:
| | | Fin angle | Angle of incidence |
|---|---|---|---|
| Port (BB) | Lower fin (30a) | 247.5° | 14° |
| Port (BB) | Middle fin (30b) | 292.5° | 12° |
| Port (BB) | Upper fin (30c) | 337.5° | 8° |
| Starboard (SB) | Fin (30b) | 90.0° | 10° |

4. The drive system of a ship according to any one of the preceding claims 1 to 3,
**characterised in that**
the fins or hydrofoils (30) disposed in the interior (20a) of the fore-nozzle (20) are variable or adjustable in their angular positions.

5. Use of a device (10) for lowering the drive output requirement of a ship, in particular for slow, full ships such as tankers, bulk transporters or tugs and also for not very fast ships of all types and for improving the oncoming flow to the propeller and for producing a pre-swirl, wherein the device (10) is mounted firmly on the hull upstream of the propeller and comprises a fore-nozzle (20) with fins or hydrofoils (30; 30a, 30b, 30c, 30d) disposed inside the fore-nozzle, wherein the fore-nozzle (20) has an inside diameter which is less than 90% of the diameter of the propeller and the fore-nozzle (20) is disposed rotationally symmetrically with its axis (21) shifted upwards, above the propeller axis (PA), wherein the fins or hydrofoils (30; 30a, 30b, 30c, 30d) are disposed asymmetrically in the interior (20a) of the fore-nozzle (20) and radially to the propeller axis (PA).

6. Use of a device according to claim 5, wherein the fins or hydrofoils connect the hull to the fore-nozzle (20) and are disposed at the rear end of the fore-nozzle (20), wherein the curved side (32) of the lenticular cross-sectional profile (31) of the fins or hydrofoils (30; 30a, 30b, 30c, 30d) is directed upwards on the upwards-turning side of the propeller and is directed downwards on the downwards-turning side of the propeller.

7. Use of a device (10) according to any one of the preceding claims 5 or 6, wherein the fins or hydrofoils (30; 30a, 30b, 30c, 30d) adopt the following radial angular positions and initial angular positions:
| | | Fin angle | Angle of incidence |
|---|---|---|---|
| Port (BB) | Lower fin (30a) | 247.5° | 14° |
| Port (BB) | Middle fin (30b) | 292.5° | 12° |
| Port (BB) | Upper fin (30c) | 337.5° | 8° |
| Starboard (SB) | Fin (30b) | 90.0° | 10° |

8. Use of a device (10) according to any one of the preceding claims 5 to 7, wherein the fins or hydrofoils (30) disposed in the interior (20a) of the fore-nozzle (20) are variable or adjustable in their angular positions.

## Revendications

1. Système d'entraînement d'un bateau comprenant au moins une hélice placée sur un axe d'hélice (PA) et un dispositif (10) de réduction de la puissance d'entraînement nécessaire du bateau qui est placé de manière fixe sur la coque avant l'hélice et une pré-tuyère (20), sachant que la pré-tuyère (20) présente un diamètre intérieur qui est inférieur à 90% du diamètre de l'hélice, sachant que la pré-tuyère (20) est placée de manière symétrique en rotation avec un axe (21) poussé vers le haut, au-dessus de l'axe d'hélice (PA), **caractérisé en ce qu'**à l'intérieur de la pré-tuyère (20), des ailerons respectivement des ailes porteuses (30 ; 30a, 30b, 30c, 30d) sont placés, sachant que les ailerons respectivement les ailes porteuses (30; 30a, 30b, 30c, 30d) sont placés de manière dissymétrique à l'intérieur (20a) de la pré-tuyère (20) et radialement à l'axe d'hélice (PA).

2. Entrainement d'un bateau selon la revendication 1,
**caractérisé en ce que**
les ailerons respectivement les ailes porteuses relient la coque à la pré-tuyère (20) et sont placés sur l'extrémité arrière de la pré-tuyère (20), sachant que le côté bombé (32) du profil transversal (31) en forme de lentille de l'aileron respectivement de l'aile porteuse (30 ; 30a, 30b, 30c, 30d) est orienté vers le haut sur le côté de l'hélice percutant en amont et vers le bas sur le côté de l'hélice percutant en aval.

3. Entrainement d'un bateau selon l'une des revendications 1 et 2,
**caractérisé en ce que**
les ailerons respectivement les ailes porteuses (30 ; 30a, 30b, 30c, 30d) adoptent les positions angulaires et positions angulaires de départ suivantes :
| | | Angle d'aileron | Angle d'incidence |
|---|---|---|---|
| Bâbord (BB) | Aileron inférieur (30a) | 247,5° | 14° |
| Bâbord (BB) | Aileron central (30b) | 292,5° | 12° |
| Bâbord (BB) | Aileron supérieur (30c) | 337,5° | 8° |
| Tribord (SB) | Aileron (30d) | 90,0° | 10° |

4. Entrainement d'un bateau selon l'une des revendications 1 à 3,
**caractérisé en ce que**
les ailerons respectivement les ailes porteuses (30) placés à l'intérieur (20a) de la pré-tuyère (20) sont modifiables respectivement réglables dans leurs positions angulaires.

5. Utilisation d'un dispositif (10) de réduction de la puissance d'entraînement nécessaire d'un bateau, en particulier pour des bateaux lents et complets comme des pétroliers, des cargos ou des remorqueurs et également pour tous les bateaux de tout type qui ne sont pas très rapides et pour améliorer le souffle de l'hélice ainsi que pour produire une pré-rotation, sachant que le dispositif (10) est placé fixement sur la coque devant l'hélice et est composé d'une pré-tuyère (20) avec des ailerons respectivement des ailes porteuses (30; 30a, 30b, 30c, 30d) placés à l'intérieur de la pré-tuyère, sachant que la pré-tuyère (20) présente un diamètre intérieur qui est inférieur à 90% du diamètre de l'hélice et la pré-tuyère (20) est placée de manière symétrique en rotation avec un axe (21) poussé vers le haut, au-dessus de l'axe d'hélice (PA), sachant que les ailerons respectivement les ailes porteuses (30; 30a, 30b, 30c, 30d) sont placés de manière dissymétrique à l'intérieur (20a) de la pré-tuyère (20) et radialement à l'axe d'hélice (PA).

6. Utilisation d'un dispositif (10) selon la revendication 5, dans lequel les ailerons respectivement les ailes porteuses relient la coque à la pré-tuyère (20) et sont placés sur l'extrémité arrière de la pré-tuyère (20), sachant que le côté bombé (32) du profil transversal (31) en forme de lentille de l'aileron respectivement de l'aile porteuse (30 ; 30a, 30b, 30c, 30d) est orienté vers le haut sur le côté de l'hélice percutant en amont et vers le bas sur le côté de l'hélice percutant en aval.

7. Utilisation d'un dispositif (10) selon l'une des revendications précédentes 5 ou 6, dans lequel les ailerons respectivement les ailes porteuses (30 ; 30a, 30b, 30c, 30d) adoptent les positions angulaires et positions angulaires de départ suivantes :
| | | Angle d'aileron | Angle d'incidence |
|---|---|---|---|
| Bâbord (BB) | Aileron inférieur (30a) | 247,5° | 14° |
| Bâbord (BB) | Aileron central (30b) | 292,5° | 12° |
| Bâbord (BB) | Aileron supérieur (30c) | 337,5° | 8° |
| Tribord (SB) | Aileron (30d) | 90,0° | 10° |

8. Utilisation d'un dispositif (10) selon l'une des revendications précédentes 5 à 7, dans lequel les ailerons respectivement les ailes porteuses (30) placés à l'intérieur (20a) de la pré-tuyère (20) sont modifiables respectivement réglables dans leurs positions angulaires.
